Europäisches Patentamt

European Patent Office

Office européen des brevets

(11) Numéro de publication: **0 253 208 B1**

(12) **FASCICULE DE BREVET EUROPEEN**

(45) Date de publication de fascicule du brevet:
**28.08.91**

(21) Numéro de dépôt: **87109484.3**

(22) Date de dépôt: **01.07.87**

(51) Int. Cl.⁵: **B60C  15/04**, B29D 30/48

(54) **Tringle pour enveloppes de pneumatiques comportant des nervures; procédé pour réaliser cette tringle; enveloppes de pneumatiques comportant une telle tringle.**

(30) Priorité: **09.07.86 FR 8610373**

(43) Date de publication de la demande:
**20.01.88 Bulletin  88/03**

(45) Mention de la délivrance du brevet:
**28.08.91 Bulletin  91/35**

(84) Etats contractants désignés:
**AT BE CH DE ES FR GB GR IT LI LU NL SE**

(56) Documents cités:
**DE-A- 1 918 224**
**FR-A- 1 380 138**
**FR-A- 1 448 380**
**FR-A- 2 234 126**
**US-A- 4 320 791**

(73) Titulaire: **MICHELIN & CIE (Compagnie Générale des Etablissements Michelin) Société
dite:**
**4 rue du Terrail**
**F-63000 Clermont-Ferrand(FR)**

(72) Inventeur: **Lacour, Jean-Charles**
**1, rue du Docteur Vigenaud**
**F-63000 Clermont-Ferrand(FR)**

(74) Mandataire: **Doussaint, Jean-Marie et al**
**MICHELIN & CIE Service K. Brevets**
**F-63040 Clermont-Ferrand Cedex(FR)**

**Description**

L'invention concerne les enveloppes de pneumatiques et plus particulièrement les tringles destinées à renforcer les bourrelets de ces enveloppes.

Lors de l'échauffement des bourrelets, par suite notamment d'un échauffement accidentel de la jante, par exemple à cause d'un blocage des freins, il se produit une altération de la gomme qui entoure les tringles de telle sorte que la/ou les nappes carcasse qui entourent les tringles ne sont plus retenues par celles-ci. Par suite de la pression de gonflage, il se produit alors un glissement relatif de ces nappes carcasse dans le bourrelet par rapport aux tringles, ce qui provoque une déformation et une détérioration des bourrelets. Ce phénomène se manifeste surtout dans le cas de tringles rigides.

Le document FR-A-1380138 correspondant au préambule de la revendication 1 décrit une tringle avec une surface extérieure comportant des ondulations, mais sans donner d'indication sur la fonction et la nature de ces ondulations. Le but de l'invention est de remédier aux inconvénients précédemment décrits en proposant une enveloppe de pneumatique dont la définition est donnée à la revendication principale 1.

Une enveloppe semblable est décrit dans la demande EP-A-025 2395 de la demanderesse.

L'invention sera aisément comprise à l'aide des exemples non limitatifs qui suivent et des figures toutes schématiques relatives à ces exemples.

Sur le dessin :
- la figure 1 représente en coupe un fil de renfort entouré d'une gaine de matière I et d'une gaine de matière II ;
- la figure 2 représente en coupe une tringle conforme à l'invention réalisée avec le fil représenté à la figure 1 ;
- la figure 3 représente en coupe radiale une enveloppe de pneumatique comportant deux tringles identiques à la tringle représentée à la figure 2 ;
- la figure 4 représente, vu de dessus, un dispositif permettant de mesurer la rigidité d'une tringle ;
- la figure 5 représente, vu de profil, un dispositif permettant de réaliser la tringle représentée à la figure 2, ce dispositif comportant un tambour ;
- la figure 6 représente en coupe une portion du tambour représenté à la figure 5 ; cette coupe étant effectuée selon la ligne droite VI-VI de la figure 5 ;
- la figure 7 représente, vu de profil, la tringle représentée à la figure 2 ;
- la figure 8 représente en coupe une autre tringle conforme à l'invention.
- la figure 9 représente en coupe radiale un bourrelet d'une enveloppe de pneumatique comportant une autre tringle conforme à l'invention.

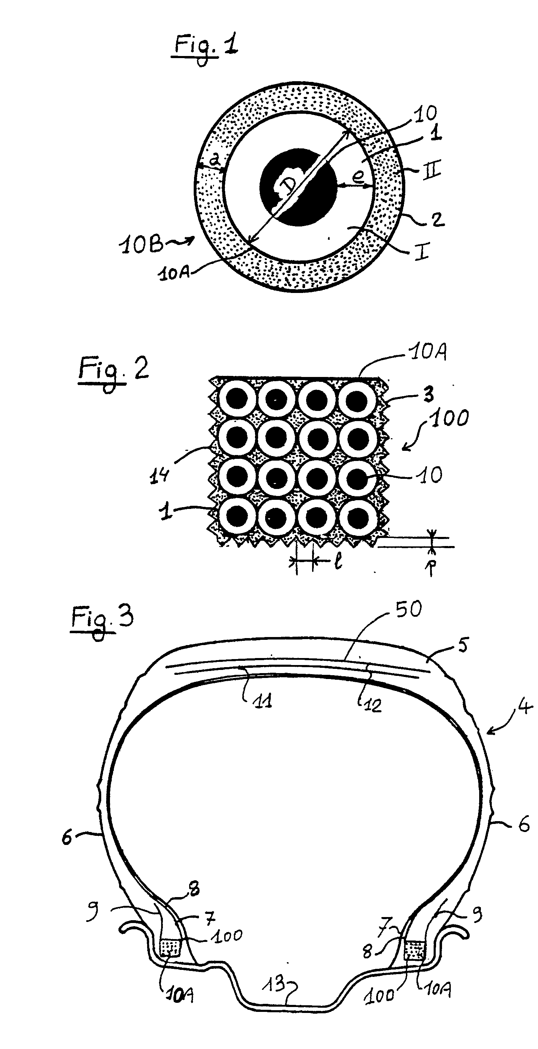

La figure 1 représente un fil 10 de renfort utilisé pour réaliser la tringle 100 conforme à l'invention et représentée à la figure 2, les figures 1 et 2 étant des coupes effectuées perpendiculairement aux axes des fils 10 qui sont disposés parallèlement entre eux dans la tringle 100.

Ce fil 10 est entouré par une gaine 1 réalisée avec une matière organique I, cette gaine 1 d'épaisseur "e" se trouvant directement au contact du fil 10, et par une gaine 2 de matière organique II, cette gaine 2 d'épaisseur "a" se trouvant directement au contact de la gaine 1. Les matières I et II sont par exemple des matières thermoplastiques telles que la température de fusion de la matière I soit supérieure à la température de fusion de la matière II.

Pour la clarté de la description plusieurs indices et appellations sont utilisés concernant le fil 10, et ceci de la façon suivante :
- le fil lui-même est référencé 10 ;
- la combinaison du fil 10 et de sa gaine 1 solide est appelée "fil gainé 10 A" ;
- la combinaison du fil 10 et de ses gaines 1,2, solides est appelée "fil gainé 10 B" (figure 1) ;
- la combinaison du fil 10, de sa gaine 1 solide et d'une gaine en matière II liquide ou pâteuse, par exemple après fusion de la gaine 2, est appelée "fil gainé 10 C".

La réalisation des gaines 1 et 2 s'effectue par exemple à l'aide de deux extrusions successives autour du fil 10, la première extrusion donnant la gaine 1 et donc le fil gainé 10 A et la deuxième extrusion donnant la gaine 2 et donc le fil gainé 10 B lorsque la gaine 2 est solide, la matière du fil 10 restant solide lorsque les matières I ou II sont à l'état fondu.

Ces deux extrusions peuvent être réalisées de façon discontinue, par exemple avec deux appareillages séparés, ou en continu, notamment avec un appareillage unique comportant une tête d'extrusion avec deux alimentation distinctes pour les matières I et II. Dans tous les cas, l'extrusion de la gaine 2 sur la gaine 1 doit être effectuée lorsque la matière I est solide, c'est-à-dire que la gaine 2 doit être extrudée sur le fil gainé 10A.

La tringle 100 comporte plusieurs fils 10A, c'est-à-dire plusieurs fils 10 entourés chacun individuellement par une gaine 1, et une matrice 3 dans laquelle sont disposés les fils gainés 10A. Cette matrice 3 est constituée par la matière II des gaines 2 précédemment décrites.

La figure 3 représente en coupe radiale une enveloppe de pneumatique 4. Cette enveloppe 4 comporte un sommet 5, deux flancs 6 et deux bourrelets 7. Chaque bourrelet 7 est renforcé avec une tringle 100 identique à la tringle 100 représentée à la figure 2. A la figure 3, pour la simplification du dessin, chaque fil 10 A est représenté par un point. Une nappe de carcasse 8 joint les tringles 100 en s'enroulant autour de ces tringles, de façon connue en soi, le retournement 9 de cette nappe 8 étant par exemple disposé vers l'extérieur de l'enveloppe 4. Le sommet 5 est rigidifié par un renfort 50 constitué par exemple de deux nappes 11 et 12. L'enveloppe 4 est montée sur sa jante 13. Conformément à l'invention, la tringle 100 comporte des nervures 14 à sa surface. Ces nervures 14 sont représentées à la figure 2, mais pas à la figure 3 dans un but de simplification. Ces nervures 14 sont réalisées avec une matière dont le module sécant en extension, mesuré à 10 % d'allongement et à 160°C, est au moins égal à 70 MPa, et de préférence au moins égal à 200 MPa et la nappe de carcasse 8 est au contact de ces nervures 14, dans la zone où elle s'enroule autour de la tringle 100, soit directement, soit par l'intermédiaire d'une mince couche de gomme, l'épaisseur de cette couche étant de préférence inférieure à 1 mm. Ces nervures 14 sont continues et circonférentielles, l'axe de ces nervures 14 étant donc l'axe de l'enveloppe 4, c'est-à-dire l'axe de révolution de l'enveloppe 4 et de la jante 13, cet axe n'étant pas représenté sur le dessin dans un but de simplification.

Ces nervures 14 permettent un bon ancrage de chaque tringle 100 dans le bourrelet 7 correspondant ainsi qu'un bon ancrage de la carcasse 8 autour de chaque tringle 100. Grâce à cette disposition, la nappe 8 se trouve ancrée aux nervures 14 et elle ne glisse pratiquement pas par rapport à la tringle 100. Lorsque la tringle 100 est rigide, c'est-à-dire lorsque sa section radiale ne peut tourner qu'avec difficulté, la tringle 100 et la nappe 8 constituent dans le bourrelet 7 un ensemble dans lequel il ne se produit pratiquement pas de glissement relatif entre la tringle 100 et la nappe 8, malgré la pression de l'air dans l'enveloppe, même lorsque le bourrelet 7 subit un échauffement, par exemple par suite d'un échauffement accidentel de la jante 13 causé par un blocage de frein, et les risques de détériorations du bourrelet 7 sont alors éliminés ou considérablement diminués.

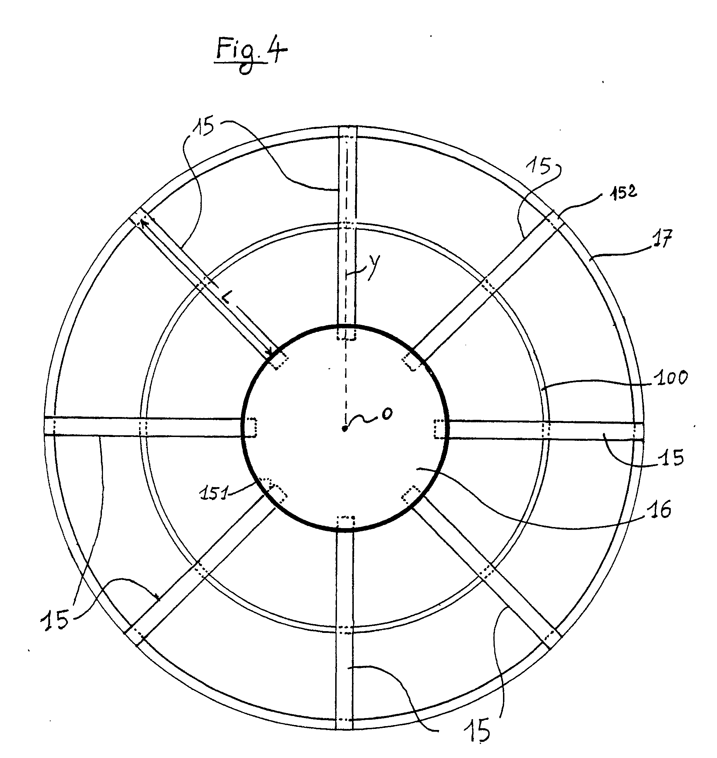

De préférence, la rigidité de la tringle 100 est telle qu'il soit nécessaire de lui appliquer un couple au moins égal à 0,8 daNm pour provoquer une rotation de 1° de sa section radiale. Par définition, une section radiale est la section de la tringle par un plan passant par l'axe de la tringle, et l'angle de rotation est déterminé, dans le plan de cette section, par la variation de l'orientation d'une droite passant par deux points de cette section, par suite de la rotation de la section due au couple. A titre d'exemple, ce couple est mesuré avec le dispositif représenté à la figure 4. Sur cette figure, la tringle 100 est disposée de telle sorte que son axe soit vertical, cet axe étant représenté par la lettre O. La tringle 100 est encastrée dans huit barreaux 15 de même longueur répartis radialement et de façon régulière, c'est-à-dire que l'axe de chacun de ces barreaux passe par l'axe O et que l'angle formé par les axes de deux barreaux consécutifs est de 45°. Pour la simplicité du dessin, l'axe Y d'un seul barreau 15 est représenté à la figure 4. Les extrémités 151 des barreaux 15 disposées vers l'axe O sont placées sous un disque circulaire 16 dont le centre est situé sur l'axe O et les extrémités 152 des barreaux 15 les plus éloignées de l'axe O sont disposées sur un anneau 17, les barreaux 15 étant au contact du disque 16 et de l'anneau 17 mais sans leur être liés mécaniquement. Initialement, la tringle 100, les barreaux 15, le disque 16 et l'anneau 17 sont horizontaux.

On applique ensuite une force le long de l'axe O sur le disque 16 mobile parallèlement à l'axe O. Ce disque 16 appuie alors verticalement sur les extrémités 151 des barreaux 15 et les déplace vers le bas. L'anneau 17 est rigide et donc il empêche les extrémités 152 des barreaux 15 de descendre. Sous l'effet de cette force axiale, les barreaux 15 s'inclinent donc vers le bas, l'axe de chaque barreau 15 restant dans un plan vertical passant par l'axe O, c'est-à-dire un plan radial. La tringle 100 est encastrée de façon rigide dans les barreaux 15, c'est-à-dire que sa section radiale subit une torsion en même temps que l'inclinaison des barreaux 15. F est la valeur de la force axiale permettant d'obtenir une inclinaison de 1° pour les barreaux 15, et L la distance radiale mesurée selon un axe Y, séparant le disque 16 et l'anneau 17, avant l'application de la force L étant donc pratiquement la distance qui sépare les forces verticales et opposées appliquées aux extrémités 151, 152 de chaque barreau 15.

Le couple appliqué à la tringle 100 est alors égal à F x L, et il permet une rotation de 1° de la section radiale de la tringle. De préférence, comme dit précédemment, ce couple est au moins égal à 0,8 daNm, ce couple étant mesuré à la température ambiante (environ 20°C).

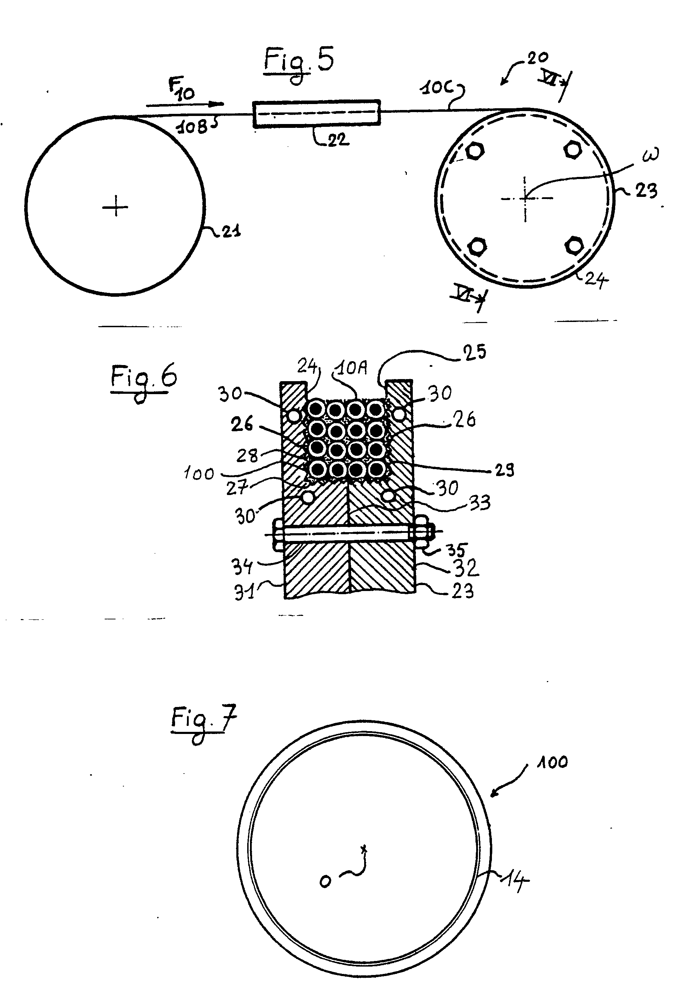

La réalisation de la tringle 100 est effectuée par exemple de la façon suivante en utilisant le dispositif 20, représenté à la figure 5, de façon analogue au procédé décrit dans la demande de brevet français 85/00875. Ce dispositif 20 comporte une bobine 21, un tunnel chauffant 22 et un tambour 23. Sur la bobine 21 est enroulé le fil gainé 10 B comportant les gains 1 et 2 solides, les matières I et II étant par exemple des matières thermoplastiques. On déroule ce fil gainé 10 B dans le sens de la flèche F₁₀, pour lui faire traverser le tunnel 22 et l'enrouler sur le tambour 23. Le tunnel 22 permet la fusion de la matière II tandis que la matière I reste solide de façon à obtenir le fil gainé 10 C que l'on enroule ensuite dans la gorge 24 du tambour 23.

La figure 6 représente une portion de la section du tambour 23 par un plan passant par l'axe de rotation du tambour 23, cet axe étant schématisé par la lettre ω à la figure 5, la coupe de la figure 6 étant schématisée par la ligne droite VI-VI à la figure 5. La gorge 24 a une orientation longitudinale sur le tambour 23, cette gorge 24 comportant un axe de révolution qui est l'axe ω du tambour 23.

La paroi 25 de la gorge 24 comporte des rainures 26 qui sont circonférentielles, c'est-à-dire qu'elles ont l'axe ω comme axe de rotation. La paroi 25 comporte trois faces : un fond 27 et deux faces latérales 28, 29. Le fond 27 a une orientation générale qui est celle d'un cylindre de révolution d'axe ω et les faces latérales 28, 29 ont une orientation générale perpendiculaire à cet axe ω, les rainures 26 étant réparties sur ces trois faces.

L'enroulement du fil gainé 10 C s'effectue dans la cavité formée par la gorge 24 par superposition de couches de spires. La pression exercée sur l'ensemble de ces spires, pendant l'enroulement, grâce aux parois 27, 28, 29 permet le remplissage des vides, entre les fils gainés 10 A, par la matière II liquide, cette matière remplissant aussi tous les vides entre la paroi 25 et les fils 10 A, la gorge 24 servant de moule lors de l'enroulement du fil 10 C, grâce à ses parois 27, 28, 29, et la matière I des gaines 1 restant solide.

Les résistances chauffantes 30 permettent de maintenir la matière II à une température supérieure à sa température de fusion et inférieure à la température de fusion de la matière I. Lorsque le nombre désiré de spires a été groupé par enroulement dans la gorge 24, on coupe le fil gainé 10 C et on laisse refroidir le tambour 23 pour provoquer la solidification de la matière II et obtenir ainsi la tringle 100.

Le tambour 23 est constitué par deux parties 31, 32 dont le plan de jonction 33, perpendiculaire à l'axe ω aboutit au fond 27. Ces parties 31, 32 sont réunies par des vis 34 qui traversent ces parties, le serrage se faisant avec les écrous 35 disposés aux extrémités des vis 34. Lorsque la matière II est solidifiée, on démonte le tambour 23 en dévissant les écrous 35 et en enlevant les vis 34, ce qui permet de séparer les parties 31, 32 et d'enlever la tringle 100 de la gorge 24. On peut ensuite remonter le tambour 23 en assemblant les parties 31, 32 pour une autre fabrication de tringle 100.

Les coupes de la tringle 100 aux figures 2 et 6 sont identiques, avec la différence que la coupe de la figure 2 est un grossissement de la coupe de la figure 6 et les nervures 14 de la tringle 100 correspondent aux rainures 26 de la gorge 24.

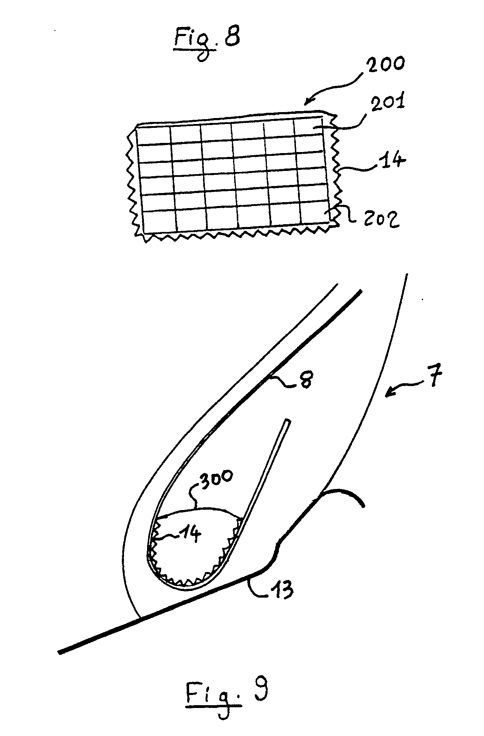

La figure 7 est une vue de profil de la tringle 100, une seule nervure 14 est représentée sur cette figure 7 dans un but de simplification, cette nervure 14 étant de révolution autour de l'axe de la tringle 100, cet axe étant représenté par le point O qui se confond avec l'axe ω du tambour 23 ou avec l'axe de l'enveloppe 4 et de la jante 13.

Le diamètre du fil 10 A est représenté par D à la figure 1, et, de préférence, la largeur "1" des nervures 14, et donc des rainures 26, est inférieure à ce diamètre D, de telle sorte que les spires de fils 10 A sont disposées de façon régulière dans la tringle 100, sans pénétrer dans les nervures 14. De préférence, cette largeur "1" est inférieure à 3 mm. Les nervures 14 ont de préférence une forme anguleuse comme représenté à la figure 2. Grâce au procédé précédemment décrit, les fils 10 restent séparés les uns des autres étant donné que les gaines 1 solides évitent tout contact direct entre les fils 10 pendant la réalisation de la tringle 100. Les gaines 1 de deux fils 10 A voisins sont en contact entre elles, c'est-à-dire que la distance entre deux fils 10 voisins est constante et égale à 2e, les fils gainés 10 A étant ainsi en contact les uns avec les autres (figure 2). Il est facile de choisir l'épaisseur "e" de la gaine 1 pour garantir une distance donnée entre deux fils 10 voisins, et il est facile aussi de choisir la quantité de matière II pour les gaines 2, telle qu'après fusion la matière II remplisse les vides entre les fils gainés 10 A, c'est-à-dire entre les gaines 1 qui servent en quelque sorte de cales entre les fils 10, lors de la réalisation de la tringle 100, et que la matière II remplisse les vides entre les fils 10 A et la paroi 25 pour former les nervures 14, cette matière II donnant ainsi la matrice 3. La quantité de matière II est déterminée par l'épaisseur "a" de la gaine 2 compte tenu du diamètre D.

On obtient ainsi de façon simple et économique une forme géométrique déterminée pour la tringle 100, avec une distance constante entre les fils 10 qui sont dépourvus de contact direct entre eux grâce aux gaines 1. On obtient ainsi des performances homogènes pour cette tringle 100, en évitant les risques d'usure des fils entre eux.

Les fils 10 peuvent être réalisés avec une matière métallique comme l'acier, ou une matière non métallique, par exemple une matière minérale, comme le verre, ou une matière organique, comme un polyester, un polyamide non aromatique ou aromatique. L'invention permet aussi d'éviter la corrosion lorsque les fils 10 sont métalliques.

Les matières organiques I et II peuvent être autres que thermoplastiques, c'est ainsi par exemple qu'au moins une de ces matières peut être une matière durcissable, la matière II, lors de la réalisation de la tringle 100, se présentant sous un état liquide ou pâteux avant durcissement pour permettre sa migration, et on provoque ensuite le durcissement de la matière II qui donne la matrice solide 3.

Lorsqu'elle est en contact avec la matière II, la matière I doit rester solide.

Lorsque les matières I et/ou II ne sont pas thermoplastiques, leur composition chimique peut varier entre le moment où on réalise l'enduction des gaines 1 et/ou 2 et le moment où ces gaines sont solides. De toute façon, lors de la réalisation de la tringle 100, la température à laquelle se trouve la matière II, lorsqu'elle est à l'état liquide ou pâteux, doit être telle que les matières du fil 10 et de la gaine 1 restent solides et ne subissent aucune dégradation notable, la matière II pouvant donc se solidifier à une température à laquelle la matière I et le fil 10 restent solides.

Il est préférable d'utiliser deux matières thermoplastiques I et II comme précédemment décrit car la mise en oeuvre est très simple et permet des cadences de fabrication rapides pour la réalisation de la tringle 100.

Les matières I et/ou II peuvent comporter chacune plusieurs matériaux organiques, par exemple un mélange de polymères, et elles peuvent comporter des matériaux non organiques, par exemple des charges, des adjuvants divers. Il est possible d'autre part, de choisir les modules des fils 10 et des matières I, II pour permettre une bonne répartition des contraintes dans la tringle 100 lors de son emploi. C'est ainsi que, de préférence, dans la tringle 100, le rapport entre d'une part le module d'extension de chaque fil 10 et d'autre part le module de compression de la matière I est au moins égal à 1 et au plus égal à 300, et les matières I et II ont de préférence pratiquement le même module de compression, ces modules d'extension et de compression étant déterminés à la température ambiante (environ 20° C). D'autre part, pour permettre une bonne répartition des contraintes dans la tringle 100, il est nécessaire que la matière I adhère aux fils 10 et à la matrice 3.

A titre d'exemple, la réalisation de la tringle 100 et ses caractéristiques sont les suivantes :
- fils 10 : fils en acier, ces fils ayant chacun un module d'extension de 20 000 daN/mm$^2$ ; diamètre de chaque fil : 1 mm ; nombre de fils dans la tringle : 16, ces fils étant répartis selon quatre couches de quatre fils chacune (quatre spires par couche) la tringle ayant une section carrée (figure 2) ;
- gaine 1 : épaisseur "e" = 0,5 mm ; matière I = polyamide 66 ; température de fusion de la matière I = 255° C ; module de compression de la matière I : 320 daN/mm$^2$ ; on préchauffe les fils 10 avant réalisation de la gaine 1 de façon connue en soi pour provoquer une bonne adhésion entre les fils 10 et la matière I ; module sécant d'extension de la matière I, mesuré à 10 % d'allongement et à 160° C : 250 MPa ;
- gaine 2 initiale, avant réalisation de la matrice 3 : épaisseur "a" à l'état solide : 0,20 mm ; matière II = polyamide 6 ; température de fusion de la matière II = 220° C ; module de compression de la matière II = 290 daN/mm$^2$ ; module sécant d'extension de la matière II, mesuré à 10 % d'allongement et à 160° C : 250 MPa ;
- distance entre fils 10 voisins : 1 mm (2e) dans chaque couche et d'une couche à l'autre ;
- largeur "1" des nervures 14 : 1 mm ; profondeur "p" des nervures 14 (Fig. 2) : 0,5 mm ;
- les matières I et II ont une bonne adhésion entre elles étant donné que ce sont deux polyamides.

Les valeurs géométriques, le module d'extension des fils d'acier et les modules de compression donnés précédemment pour les tringles 100 sont déterminés à 20° C.

La réalisation des gaines 1 et 2 autour des fils 10 est effectuée par double extrusion comme décrit précédemment. La réalisation de la tringle 100 s'effectue comme précédemment décrit dans le dispositif 20, la température de la matière II dans le tunnel 22 et dans la gorge 24 étant d'environ 245° C.

Il va de soit qu'on pourrait enrouler simultanément plusieurs spires de fils gainés 10 C dans la gorge 24 par exemple en utilisant en même temps plusieurs bobines 21. Le procédé précédemment décrit pour la réalisation de la tringle 100 est simple, rapide, et il a de plus l'avantage de permettre une grande variété de formes de tringle en faisant varier la forme de la gorge où s'enroulent les spires du fil gainé 10 C, cette variation de forme pouvant intervenir lors de l'enroulement des spires de fils 10 C comme décrit par exemple dans la demande de brevet français précitée 85/00875. On peut aussi opérer en continu le double gainage du fil 10 avec les matières I et II et la réalisation de la tringle 100 comme décrit par exemple dans la demande de brevet français précitée 85/00875.

L'invention n'est pas limitée au cas où la tringle comporte des fils gainés. La figure 8 représente par exemple en coupe une autre tringle 200 conforme à l'invention.

Cette tringle 200 comporte un ensemble 201 de fils de renfort 202. Cet ensemble 201 est du type dit "paquet", fabriqué par exemple d'après le procédé décrit dans le brevet FR 2 456 610. Ce procédé consiste essentiellement à conférer au fil d'acier, préalablement à son enroulage sur la forme de fabrication, une déformation permanente au moyen d'une flexion déviée appropriée, cet ensemble 201 étant donc constitué par un empilement de fils 202 métalliques adjacents, de section rectangulaire et enroulés jointement de couche à couche et de fil à fil sur une forme de fabrication après cintrage permanent des fils. Conformément à l'invention, cette tringle comporte à sa surface des nervures 14 réalisées par exemple avec la même matière que pour la tringle 100, ces nervures 14 étant obtenues notamment en surmoulant par injection cette matière sur l'ensemble 201 disposé au préalable dans le moule d'injection. Cette tringle se caractérise par une grande rigidité.

L'invention n'est pas limitée aux cas où les tringles ont en coupe une forme générale polygonale. La figure 9 représente par exemple en coupe radiale le bourrelet 7 d'une enveloppe de pneumatique, ce bourrelet étant renforcé par une autre tringle 300, conforme à l'invention, qui présente sur cette coupe une forme générale courbe dans la portion où elle est au contact de la nappe de carcasse 8, pour répartir de façon homogène les efforts de la nappe 8 sur une surface de tringle la plus grande possible, par l'intermédiaire des nervures 14. Une telle disposition est particulièrement avantageuse dans le cas d'enveloppes de pneumatiques pour véhicules poids lourds. Pour la simplicité du dessin, les fils de renfort de la tringle 300 ne sont pas représentés à la figure 9.

De préférence les nervures 14 sont continues et disposées circonférentiellement, comme précédemment décrit, mais l'invention couvre les cas où ces nervures 14 sont discontinues et/ou ont une orientation non circonférentielle, ces nervures 14 pouvant par exemple avoir une forme spiralée.

**Revendications**

1.  Enveloppe de pneumatiques (4) comportant au moins une nappe carcasse (8) et au moins un bourrelet (7) renforcé avec au moins une tringle (100) comportant à sa surface des nervures (14) réalisées avec une matiere plastique caractérisée en ce que le module sécant en extension, mesuré à 10% d'allongement et à 160° C de ladite matière plastique est au moins égal à 70 MPa, ces nervures (14) sont destinées à venir au contact de la nappe carcasse (8) dans l'enveloppe (4), soit directement, soit par l'intermédiaire d'une mince couche de gomme d'une épaisseur inférieure à 1mm, les nervures (14) ont une forme anguleuse, et la largeur (1) des nervures (14) est inférieure à 3 mm."

2.  Enveloppe selon la revendication 1 caractérisée en ce que la matière a un module sécant en extension, mesuré à 10 % d'allongement et à 160° C, au moins égal à 200 MPa,

3.  Enveloppe selon l'une quelconque des revendications 1 ou 2 caractérisée en ce que les nervures sont continues.

4.  Enveloppe selon l'une quelconque des revendications 1 à 3 caractérisée en ce que les nervures sont circonférentielles.

5.  Enveloppe selon l'une quelconque des revendications 1 à 4 caractérisée en ce que la matière plastique des nervures (14) est une matière thermoplastique.

6.  Enveloppe selon la revendication 5 caractérisée en ce que cette matière est un polyamide.

7.  Enveloppe selon l'une quelconque des revendications 1 à 6 caractérisée en ce que la tringle (100) a une rigidité telle qu'il soit nécessaire de lui appliquer un couple au moins égal à 0,8 daNm, à la température ambiante, pour provoquer une rotation de 1 de sa section radiale.

8.  Enveloppe selon l'une quelconque des revendications 1 à 7 caractérisée en ce que la tringle (100) comporte un ensemble de fils (10) de renfort entourés individuellement d'une gaine (1) les gaines (1) de deux fils (10) voisins étant en contact entre elles, une matrice (3) entourant ces fils gainés (10A).

9.  Enveloppe selon la revendication 8, caractérisée en ce que les nervures (14) sont constituées par cette matrice (3).

**Claims**

1.  A pneumatic tyre (4) comprising at least one carcass ply (8) and at least one bead (7) reinforced with at least one bead ring (100) comprising on its surface ribs (14) made from a plastic material, characterized by the fact that the secant modulus in extension, measured at 10 % elongation and at 160° C, of said plastic material is at least equal to 70 MPa, these ribs (14) are designed to come into contact with the carcass ply (8) in the tyre (4), either directly or via a thin layer of rubber whose thickness is less than 1 mm, the ribs (14) are of an angular shape, and the width (1) of the ribs (14) is less than 3 mm.

2.  A tyre according to claim 1, wherein the material has a secant modulus in extension, measured at 10 % elongation and at 160° C, equal to at least 200 MPa.

3. A tyre according to any one of claims 1 or 2, wherein the ribs are continuous.

4. A tyre according to any one of claims 1 to 3, wherein the ribs are circumferential.

5. A tyre according to any one of claims 1 to 4, wherein the plastic material of the ribs (14) is a thermoplastic material.

6. A tyre according to claim 5, wherein the material is a polyamide.

7. A tyre according to any one of claims 1 to 6, wherein the bead ring (100) has a rigidity such that it is necessary to apply to the bead ring a torque equal to at least 0.8 daNm, at room temperature, in order to cause a rotation of $1^{\circ}$ of the bead ring radial section.

8. A tyre according to any one of claims 1 to 7, wherein the bead ring (100) comprises an assembly of reinforcement wires (10) surrounded individually by a sheath (1), the sheaths (1) of two adjacent wires (10) being in contact with each other, and a matrix (3) surrounding these sheathed wires (10A).

9. A tyre according to claim 8, wherein the ribs (14) are formed by this matrix (3).

**Patentansprüche**

1. Luftreifenhülle (4), umfassend mindestens eine Kaskassenlage (8) und zumindest einen Wulst (7), der mit zumindest einem Kern (100) verstärkt ist, der an seiner Oberfläche Leisten (14) aufweist die aus einem Kunststoffmaterial bestehen, dadurch gekennzeichnet, daß der Sekantendehnungsmodul gemessen bei 10 %-iger Dehnung und bei $160^{\circ}$C des genannten Plastikmaterials zumindest gleich ist 70 MPa, diese Leisten (14) sind dazu bestimmt, in Kontakt mit der Karkassenlage (8) im Luftreifen (4) zu kommen, sei es direkt, sei es durch eine zwischengelegte dünne Gummischichte deren Dicke kleiner als 1 mm ist, wobei die Leisten (14) eine kantige Form aufweisen und wobei die Breite (1) der Leisten (14) kleiner als 3 mm ist.

2. Hülle nach Anspruch 1, dadurch gekennzeichnet, daß das Material einen Sekantendehnungsmodul gemessen bei 10 %-iger Dehnung und bei $160^{\circ}$C, von zumindest gleich 200 MPa hat.

3. Hülle nach einem der Ansprüche 1 oder 2, dadurch gekennzeichnet, daß die Leisten kontinuierlich ausgebildet sind.

4. Hülle nach einem der Ansprüche 1 bis 3, dadurch gekennzeichnet, daß die Leisten in Umfangsrichtung verlaufen.

5. Hülle nach einem der Ansprüche 1 bis 4, dadurch gekennzeichnet, daß das Plastikmaterial der Leisten (14) thermoplastisch ist.

6. Hülle nach Anspruch 5, dadurch gekennzeichnet, daß dieses Material ein Polyamid ist.

7. Hülle nach einem der Ansprüche 1 bis 6, dadurch gekennzeichnet, daß der Kern (100) eine so große Steifigkeit aufweist, daß es notwendig ist, auf ihn ein Drehmoment von zumindest gleich 0,8daNm bei Umgebungstemperatur aufzubringen, um eine Verdrehung seines Radialquerschnittes um $1^{\circ}$ zu bewirken.

8. Hülle nach einem der Ansprüche 1 bis 7, dadurch gekennzeichnet, daß der Kern (100) ein Ensemble von Verstärkungsfäden (10) aufweist, die einzeln von einer Hülle(1) umhüllt, wobei die Hüllen (1) zweier benachbarter Fäden (10) kontakt untereinander haben und wobei eine Matrize (3), die umhüllten Fäden (10A) umgibt.

9. Hülle nach Anspruch 8, dadurch gekennzeichnet, daß die Leisten (14) aus dieser Matrize (3) bestehen.

Fig. 1

Fig. 2

Fig. 3

Fig. 4

## Fig. 5

## Fig. 6

## Fig. 7

Fig. 8

Fig. 9